# EUROPEAN PATENT SPECIFICATION

(11) **EP 2 460 697 B1**
(45) Date of publication and mention of the grant of the patent: **16.01.2013**
(21) Application number: 10193783.7
(22) Date of filing: 06.12.2010
(51) Int. Cl.: B60R 22/02

(54) **Seat belt device**
Sicherheitsgurtvorrichtung
Dispositif de ceinture de sécurité

(43) Date of publication of application: 06.06.2012
(73) Proprietor: Honda Motor Co., Ltd., Tokyo 107-8556 (JP)
(72) Inventor: Kerkeling, Christoph, 63073, Offenbach/Am Main (DE)
(74) Representative: Prechtel, Jörg

(56) References cited:
- EP-A1- 2 055 539
- WO-A1-2005/025948
- FR-A1- 2 825 959
- FR-A1- 2 851 974
- GB-A- 1 433 302
- GB-A- 2 386 831
- GB-A- 2 389 821
- GB-A- 2 407 537
- US-A- 3 819 197
- US-A1- 2002 089 164
- US-A1- 2006 001 252
- US-A1- 2010 156 084

## Description

### BACKGROUND OF THE INVENTION

### Field of the Invention

The present invention relates to a seat belt device.

### Description of Related Art

An existing, a four-point type seat belt device is commonly known (for example, JP-A-2000-16235). This four-point type seat belt device includes a shoulder belt unit that restrains the shoulder of an occupant by uncoupleably connecting left and right webbings, which extend downward from the upper left and right portions of the seat, at each middle portion of the webbings through a connection member. Further, the four-point type seat belt device includes a lap belt unit that restrains the femoral region of an occupant by changing the extension direction of one of the webbings to a lateral direction from a vertical direction and by uncoupleably connecting the front-end portion of this webbing to a mounting member that is provided at a position of the other webbing at the lower portions of the seat.

Meanwhile, the above-mentioned four-point type seat belt device according to the related art has problems in that the structure is complicated and the disposition of the webbing (for example, one webbing of which the extension direction is changed) is complicated.

That is, each one connection operation at the connection member and the mounting member, namely two connection operations, need(s) to be performed, and since each of the connection operations is difficult to perform with only one hand, each of the connection operations needs to be performed with both hands. For this reason, there is a problem in that the mounting of the webbing is troublesome.

In addition, since there is a possibility that the connection member having a high stiffness comes into contact with the chest or abdomen of an occupant, there is a concern that the connection member may be uncomfortable for the occupant or an impact may be excessively concentrated on and applied where the connection member comes into contact with the chest or abdomen of the occupant at the time of an emergency locking operation.

Further, since the extension direction of one of the webbings is changed, a frictional force applied to this webbing is larger than a frictional force applied to the other webbing, so that the frictional forces applied to the left and right webbings are unbalanced. For this reason, there is a concern that appropriate restraint may not be secured.

A seat belt device, comprising a band that is supported by two support portions, provided at the back of a seat is known from FR 2 825 959 A1. The band has a lower portion and two crossed portions. Two tongues are attached to the band, which can be connected to two connection units on each lateral side of the seat cushion. In an open state, the band rests over the seat, the tongues being fixed to the roof of the vehicle. For closing the seat belt, the driver detaches both tongues from the roof and connects them to the connection units.

### SUMMARY OF THE INVENTION

An object of the invention is to provide a seat belt device that can prevent the complication of the structure thereof, be easily mounted and disconnected with only one hand, and appropriately restrain an occupant.

According to an aspect of the invention, there is provided a seat belt device according to claim 1. The seat belt device includes a seat, a band-like body, a first winding unit, a second winding unit, a third winding unit, a connecting unit, and two support members. The seat includes a seat back, a seat cushion, and a headrest. The band-like body includes a lower portion and two extension portions that are erected and extend from both ends of the lower portion. The band-like body is formed in a U shape and is elastically deformable. The first winding unit is provided at the seat back or at a rear position of the seat back and winds a first belt. One end of the first belt is connected to one of the two extension portions of the band-like body. The second winding unit is provided at the seat back or at a rear position of the seat back and winds a second belt. One end of the second belt is connected to the other of the two extension portions of the band-like body. The third winding unit is provided on one side of the seat cushion and winds a third belt. One end of the third belt is connected to one end portion of the lower portion of the band-like body. The connecting unit is provided on the other side of the seat cushion. One end of a fourth belt is connected to the other end portion of the lower portion of the band-like body, and a tongue member is provided at the other end of the fourth belt. The tongue member of the fourth belt is uncoupleably connected to the connecting unit. The two support members are provided at the seat back, support front-end portions of the two extension portions of the band-like body, and are rotatable about rotating shafts extending in a lateral direction of the seat back. The band-like body is rotatable about the rotating shafts of the two support members that support the respective front-end portions of the two extension portions, and is displaceable to a state where at least the lower portion is positioned above the headrest and a state where the lower portion is positioned below a middle portion of the seat back, wherein in the state where the lower portion is positioned below the middle portion of the seat back, the front-end portions of the respective extension portions of the band-like body are separated from the rotating shafts, so that the support of the front-end portions by the respective first and second support members is released.

In the above-mentioned aspect, one end of the first belt may be connected to a substantially middle portion of one extension portion and one end of the second belt may be connected to a substantially middle portion of the other extension portion.

In the above-mentioned aspect, the support members may include biasing units for biasing a rotation in a direction directed toward the upper side from the front side of the seat back of rotations about the rotating shafts.

In the above-mentioned aspect, a winding force of the third winding unit for winding the third belt may be smaller than a winding force of the first winding unit for winding the first belt and than a winding force of the second winding unit for winding the second belt.

In the above-mentioned aspect, the seat belt device may further include a detection unit for detecting whether the tongue member is connected to the connecting unit or not. The first winding unit includes a first motor that generates a winding force for winding the first belt, and the second winding unit includes a second motor that generates a winding force for winding the second belt. The seat belt device may further include control means for making the first and second winding unit wind the first and second belts by driving the first and second motors when the detection unit detects that the state of the tongue member is changed to a state where the tongue member is not connected to the connecting unit from a state where the tongue member is connected to the connecting unit. Alternatively, pre-stressed springs can wind the first and second belts without the first and second motors.

Since the seat belt device according to an aspect of the invention includes the U-shaped band-like body to which the first to fourth belts are connected, it may be possible to prevent the four-point type seat belt device from being complex, and to prevent a frictional force applied to each of the belts from increasing or to prevent the application of the frictional force from being complex.

In addition, it may be possible to finish mounting with only one simple connection operation for connecting the tongue member to the connecting unit and to perform the connection operation with only one hand thus to prevent the mounting of the band-like body and the respective belts from being troublesome.

Further, the band-like body is elastically deformable. Accordingly, even though the band-like body comes into contact with the chest or abdomen of an occupant, it may be possible to prevent the band-like body from being uncomfortable, due to press, or to prevent an impact from being excessively concentrated and applied where the band-like body comes into contact with the chest or abdomen of the occupant at the time of an emergency locking operation.

Furthermore, since the band-like body may be displaced to a state where the lower portion is positioned above the headrest, it may be possible to prevent the band-like body and the respective belts from hindering an occupant from seating and/or unseating.

Moreover, since the band-like body may be displaced to a state where the lower portion is positioned below the middle portion of the seat back, a shoulder belt unit, which restrains the shoulder of an occupant, may be appropriately formed by using the two extension portions of the band-like body and the first and second belts connected to the extension portions. In addition, a lap belt unit, which restrains the femoral region of an occupant, may be appropriately formed by using the lower portion of the band-like body and the third and fourth belts connected to the lower portion. Accordingly, it may be possible to appropriately restrain the occupant.

In addition, according to the above-mentioned aspect, when the first and second belts are wound by the first and second winding unit while the respective front-end portions of the two extension portions of the band-like body are supported by the two support members, the band-like body is rotated about the rotating shafts of the support members, for example, from a state where the lower portion is positioned on the front side of the seat back to a state where the lower portion is positioned above the headrest.

In this case, one ends of the first and second belts are connected to the substantially middle portions (or the lower portion side of the substantially middle portions) of the two extension portions, respectively. Accordingly, for example, as compared to when the one ends of the first and second belts are connected to the extension portions at the positions close to the front-end portions of the two extension portions, it may be possible to adequately displace (rotate) the band-like body to a state, where the lower portion is positioned above the headrest, by a smaller force.

Therefore, it may be possible to adequately prevent the band-like body and the respective belts from hindering an occupant from seating and/or unseating.

Furthermore, according to the above-mentioned aspect, while the respective front-end portions of the two extension portions of the band-like body are supported by the two support members, the band-like body is easily rotated about the rotating shafts of the support members by the biasing forces that are applied to the support members by the biasing units, for example, from a state where the lower portion is positioned on the front side of the seat back to a state where the lower portion is positioned above the headrest. Therefore, it may be possible to adequately prevent the band-like body and the respective belts from hindering an occupant from seating and/or unseating.

In addition, according to the above-mentioned aspect, when the connection and fixing between the tongue member and the connecting unit is released, a force for moving the band-like body to a state where the lower portion is positioned below the middle portion of the seat back by the winding force of the third winding unit and a force for moving the band-like body to a state where the lower portion is positioned above the headrest from the front side of the seat back by the winding forces of the first and second winding unit are applied to the band-like body.

In this case, the winding force of the third winding unit is smaller than the winding forces of the first and second winding unit. Accordingly, when the connection and fixing between the tongue member and the connecting unit is released, the band-like body is displaced to a state where the lower portion is positioned above the headrest. Therefore, it may be possible to adequately prevent the band-like body and the respective belts from hindering an occupant from seating and/or unseating.

Further, according to the aspect, when the connection and fixing between the tongue member and the connecting unit is released, it may be possible to quickly position the lower portion of the band-like body above the headrest and to adequately prevent the band-like body and the respective belts from hindering an occupant from seating and/or unseating.

### BRIEF DESCRIPTION OF THE DRAWINGS

FIG. 1 view shows a state where a lower portion of a band-like body of a seat belt device is positioned above a headrest.
FIG. 2 view shows a state where the lower portion of the band-like body of the seat belt device is positioned above a headrest.
FIG. 3 view shows a state where the lower portion of the band-like body of the seat belt device is positioned on the front side of a headrest.
FIG. 4 view shows a state where the lower portion of the band-like body of the seat belt device is positioned on the front side of a headrest.
FIG. 5 view shows a state where a tongue plate of the seat belt device is engaged with a buckle and the lower portion of the band-like body is positioned below the middle portion of a seat back.
FIG. 6 view shows a state where the tongue plate of the seat belt device is engaged with the buckle and the lower portion of the band-like body is positioned below the middle portion of the seat back.
FIG. 7 view shows the structure of first and second support members of the seat belt device.

### DETAILED DESCRIPTION OF THE INVENTION

A seat belt device according to an embodiment of the invention will be described below with reference to accompanying drawings.

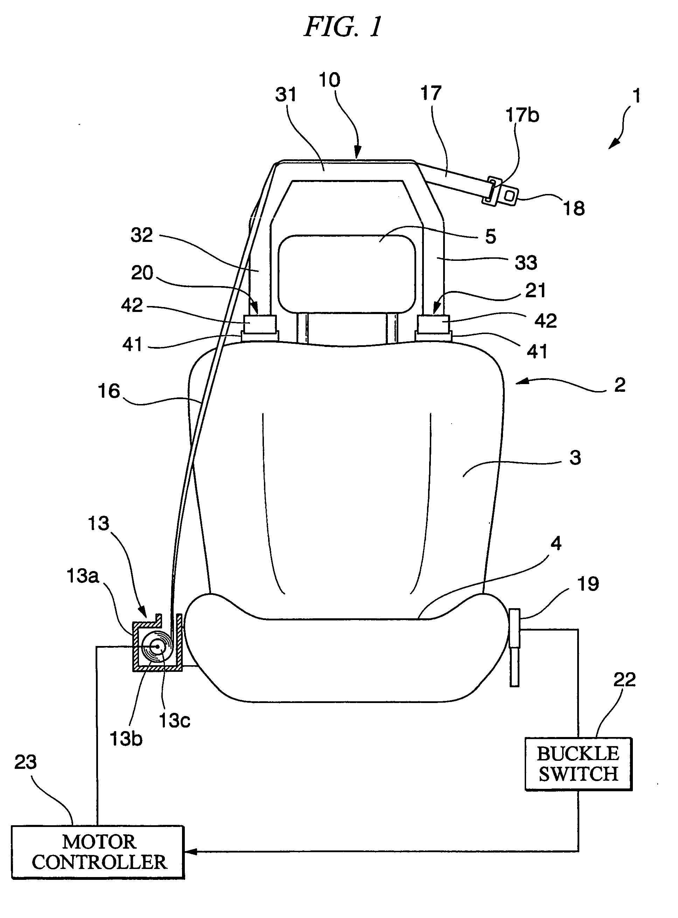

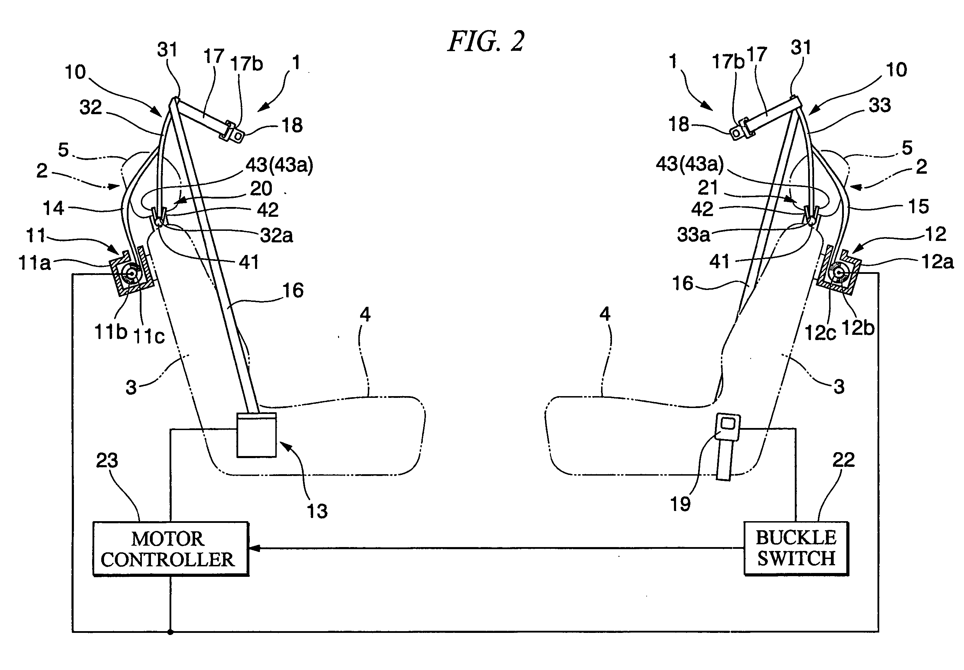

A seat belt device 1 according to this embodiment is, for example, a four-point type seat belt device that is provided on a vehicle seat 2 as shown in FIGS. 1 and 2, and can restrain an occupant that is seated in the seat 2.

Meanwhile, the seat 2 is, for example, a front low seat of a vehicle cabin that faces the front side of a vehicle. The seat 2 includes a seat back 3, a seat cushion 4, and a headrest 5.

For example, the seat belt device 1 includes a band-like body 10; first to third retractors (first to third winding unit) 11, 12, and 13; first and second shoulder belts (first and second belts) 14 and 15; first and second lap belts (third and fourth belts) 16 and 17; a tongue plate (tongue member) 18; a buckle (connecting unit) 19; first and second support members 20 and 21; a buckle switch (detection unit) 22; and a motor controller (control unit) 23. Alternatively, in a case that the first to third motors 11c, 12c, 13c are not provided in the first to third retractors 11, 12, 13, the motor controller 23 can be omitted.

The band-like body 10 is made of a composite material, which is formed by covering the surface of a metal sheet with a resin such as a PC/ABS alloy resin so as to be elastically deformable.

That is, the band-like body 10 has a stiffness so as not to allow the band-like body to be bent by a force that is caused by winding forces of the respective retractors 11, 12, and 13 to be described below and is applied to the band-like body 10 through the respective first and second shoulder belts 14 and 15 and the first lap belt 16. Further, the band-like body is formed so as to be bent by elastic deformation that is caused by an impact applied to the band-like body 10 at the time of an emergency locking operation or the like.

For example, the band-like body 10 includes a lower portion 31 and two extension portions 32 and 33 that are erected and extend from both ends of the lower portion 31 and is formed in a U shape.

Meanwhile, the band-like body 10 is formed so as not to come into contact with a headrest 5 and the head of an occupant seated in the seat 2 while front-end portions 32a and 33a of the respective extension portions 32 and 33 are supported by the respective first and second support members 20 and 21 to be described below. Further, the band-like body is formed so that the lower portion 31 may be disposed below the middle portion of the seat back 3.

For example, a distance between the two extension portions 32 and 33 is formed larger than the width of the headrest 5 in a lateral direction.

Further, for example, the length of each of the extension portions 32 and 33 (that is, a distance between the front-end of each of the extension portions 32 and 33 and the lower portion 31) is formed to be larger than a distance between the upper end of the seat back 3 and the upper end of the headrest 5 and to be larger than a distance between the middle portion and the upper end of the seat back 3. In this case, the length of each of the extension portions 32 and 33 may be formed to be smaller than a distance between the upper end of the seat back 3 and the upper end of the seat cushion 4

For example, the first retractor 11 is fixed to the back surface of the seat back 3 at a position that is deviated toward the outside of a vehicle body.

The first retractor 11 includes a first retractor frame 11a; a first belt reel 11b on which the first shoulder belt 14 is wound and which is rotatably supported by the first retractor frame 11a; a first motor 11c that has a rotating shaft (not shown) directly connected to a rotating shaft (not shown) of the first belt reel 11b; a winding spring (not shown) that urges the first belt reel 11b in a winding direction of the first shoulder belt 14; and an emergency locking mechanism (not shown) that mechanically locks the feed of the first shoulder belt 14. Alternatively, in the first retractor 11, the first motor 11c can be omitted.

Further, the first retractor 11 performs operations for winding and drawing the first shoulder belt 14 by the urging force of the winding spring, and the torque in a normal rotation direction (the winding direction of the first shoulder belt 14) and the torque in a reverse rotation direction (the drawing direction of the first shoulder belt 14) of the first motor 11c which is controlled by the motor controller 23. Alternatively, the winding spring can wind the first shoulder belt 14 without the first motor 11c.

For example, the second retractor 12 is fixed to the back surface of the seat back 3 at a position that is deviated toward the inside of a vehicle body.

The second retractor 12 includes a second retractor frame 12a; a second belt reel 12b on which the second shoulder belt 15 is wound and which is rotatably supported by the second retractor frame 12a; a second motor 12c that includes a rotating shaft (not shown) directly connected to a rotating shaft (not shown) of the second belt reel 12b; a winding spring (not shown) that urges the second belt reel 12b in a winding direction of the second shoulder belt 15; and an emergency locking mechanism (not shown) that mechanically locks the feed of the second shoulder belt 15. Alternatively, in the second retractor 12, the second motor 12c can be omitted.

Furthermore, the second retractor 12 performs operations for winding and drawing the second shoulder belt 15 by the urging force of the winding spring, and the torque in a normal rotation direction (the winding direction of the second shoulder belt 15) and the torque in a reverse rotation direction (the drawing direction of the second shoulder belt 15) of the second motor 12c which is controlled by the motor controller 23. Alternatively, the winding spring can wind the second shoulder belt 15 without the motor.

The third retractor 13 is fixed to, for example, one side portion of the seat cushion 4 (for example, the side portion or the like of the outside of a vehicle body).

The third retractor 13 includes a third retractor frame 13a; a third belt reel 13b on which the first lap belt 16 is wound and which is rotatably supported by the third retractor frame 13a; a third motor 13c that includes a rotating shaft (not shown) directly connected to a rotating shaft (not shown) of the third belt reel 13b; a winding spring (not shown) that urges the third belt reel 13b in a winding direction of the first lap belt 16; and an emergency locking mechanism (not shown) that mechanically locks the feed of the first lap belt 16. Alternatively, in the third retractor 13, the third motor 13c can be omitted.

Moreover, the third retractor 13 performs operations for winding and drawing the first lap belt 16 by the urging force of the winding spring, and the torque in a normal rotation direction (the winding direction of the first lap belt 16) and the torque in a reverse rotation direction (the drawing direction of the first lap belt 16) of the third motor 13c, which is controlled by the motor controller 23. Alternatively, the winding spring can wind the first lap belt 16 without the motor.

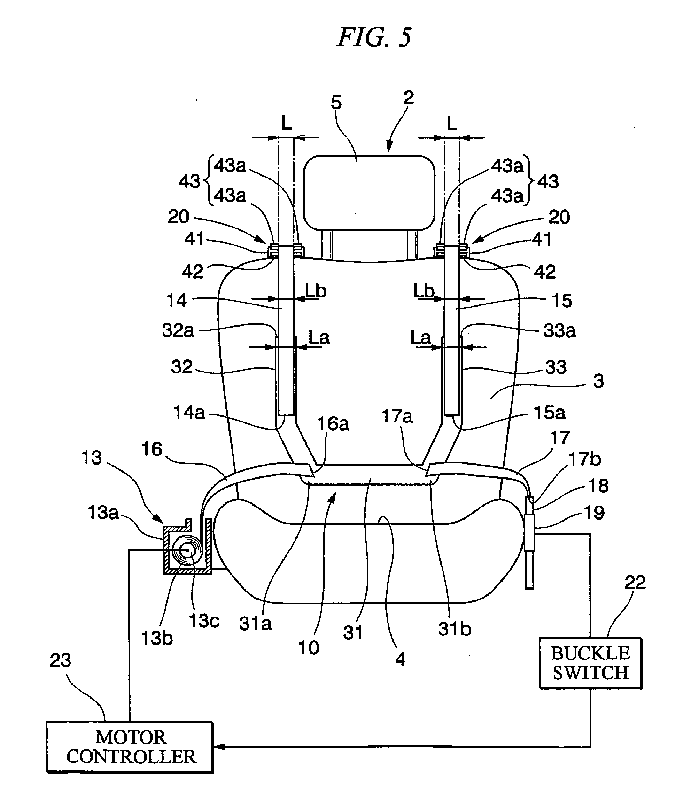

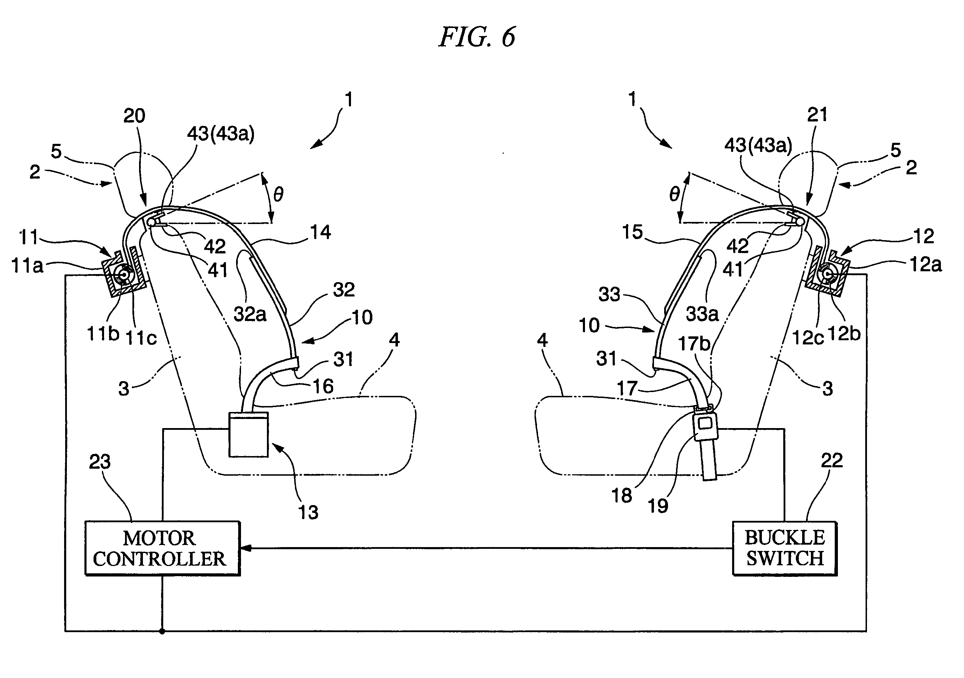

As shown in FIG. 5 and 6, one end 14a of the first shoulder belt 14 is connected to the substantially middle portion (or the lower portion side of the substantially middle portion) of one extension portion 32 of the band-like body 10, and the other end (not shown) thereof is fixed to the first belt reel 11b of the first retractor 11. In an initial state (for example, an unmounted state), the first shoulder belt is wound on the first retractor 11 so as to be capable of being drawn.

As shown in FIG. 5 and 6, one end 15a of the second shoulder belt 15 is connected to the substantially middle portion (or the lower portion side of the substantially middle portion) of the other extension portion 33 of the band-like body 10, and the other end (not shown) thereof is fixed to the second belt reel 12b of the second retractor 12. In an initial state (for example, an unmounted state), the second shoulder belt is wound on the second retractor 12 so as to be capable of being drawn.

As shown in FIG. 5 and 6, one end 16a of the first lap belt 16 is connected to one end portion 31a of the lower portion 31 of the band-like body 10, and the other end (not shown) thereof is fixed to the third belt reel 13b of the third retractor 13. In an initial state (for example, an unmounted state), the first lap belt is wound on the third retractor 13 so as to be capable of being drawn.

As shown in FIG. 5 and 6, one end 17a of the second lap belt 17 is connected to the other end portion 31b of the lower portion 31 of the band-like body 10, and a tongue plate 18 is fixed to the other end 17b thereof.

The tongue plate 18 is uncoupleably connected to the buckle 19 that is fixed to, for example, the other side portion of the seat cushion 4 (for example, the side portion or the like of the inside of a vehicle body).

Further, when the tongue plate 18 is connected and fixed to the buckle 19, the second lap belt 17 disposes the lower portion 31 of the band-like body 10 at a predetermined position (for example, at a low position or the like for preventing the occurrence of a submarine phenomenon such as the slide of an occupant's body).

Meanwhile, in the unmounted state where the tongue plate 18 is detached from the buckle 19 (for example, an initial state where various operations are not performed by an occupant) or the like, a winding force of the first retractor 11 for winding the first shoulder belt 14 and a winding force of the second retractor 12 for winding the second shoulder belt 15 are set to be larger than a winding force of the third retractor 13 for winding the first lap belt 16.

Further, the winding force of the first to third retractors 11, 12, and 13 is a force having the strength that allows an occupant's moving operation of the tongue plate 18 to the buckle 19 with one hand, for example, when the tongue plate 18 and the buckle 19 are not connected and fixed to each other, or an occupant's operation for adjusting the position of each of the belts 14, 15, 16, and 17 and the band-like body 10, for example, when the tongue plate 18 and the buckle 19 are connected and fixed to each other.

The first support member 20 is disposed, for example, on the upper end portion of the seat back 3 at a position that is deviated from the headrest 5 toward the outside of a vehicle body. The second support member 21 is disposed, for example, on the upper end portion of the seat back 3 at a position that is deviated from the headrest 5 toward the inside of a vehicle body.

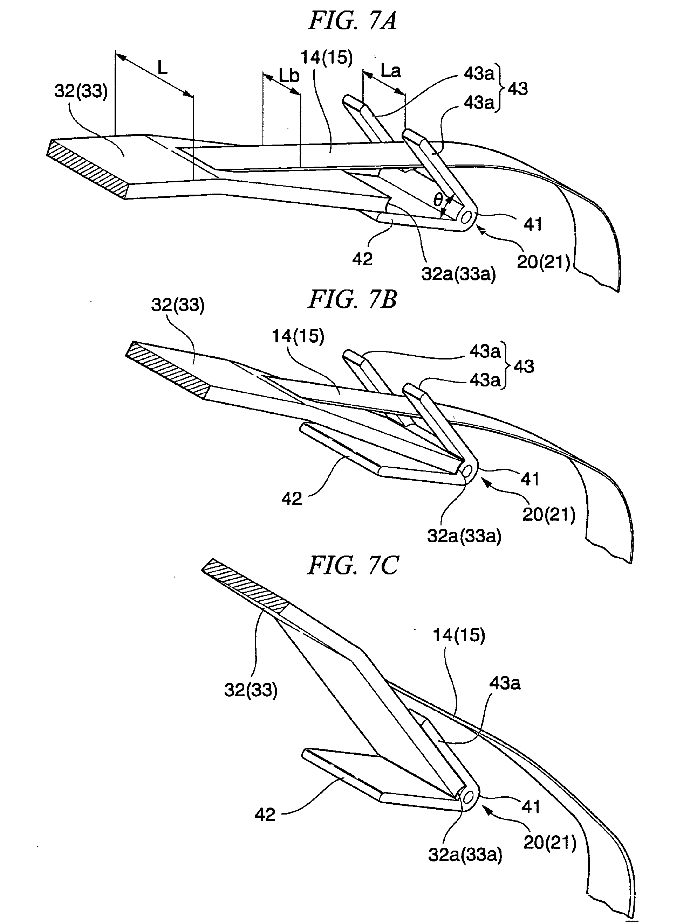

The first and second support members 20 and 21 have the same shape as shown in, for example, FIGS. 7A to 7C. Each of the first and second support members includes a pivot 41, a band-like body guide member 42, and a belt guide member 43. The band-like body guide member and the belt guide member protrude (extend) outward in a radial direction from the outer peripheral surface of the pivot 41, and form a predetermined angle θ therebetween.

The pivots 41 are disposed so as to extend in the lateral direction of the seat back 3, and are rotatably supported at the upper end portions of the seat backs 3.

The band-like body guide members 42 are, for example, plate-like members, and protrude (extend) outward in the radial direction from predetermined positions in circumferential directions on the outer peripheral surfaces of the pivots 41.

Each of the belt guide members 43 includes two protruding members 43a and 43a that are disposed so as to be spaced apart from each other in the axial direction of the pivot 41 by a predetermined distance L. The belt guide members protrude outward in the radial direction from positions that are deviated from the protruding positions of the band-like body guide members 42 in predetermined circumferential directions (a direction directed from the front side through the upper side to the rear side of the headrest 5) on the outer peripheral surfaces of the pivots 41 by a predetermined angle θ.

That is, the band-like body guide member 42 and the belt guide member 43 are formed in a V shape having a predetermined angle θ therebetween as seen in the axial direction of the pivot 41.

Further, the distance between the two protruding members 43a and 43a of the belt guide member 43 (that is, the predetermined distance L in the axial direction of the pivot 41) is smaller than the width La of each of the extension portions 32 and 33 of the band-like body 10 and is larger than the width Lb of each of the first and second shoulder belts 14 and 15.

Accordingly, at least temporary, the first support member 20 can support the front-end portion 32a of one extension portion 32 of the band-like body 10 so that the front-end portion 32a of one extension portion 32 of the band-like body 10 is interposed between the band-like body guide member 42 and the belt guide member 43 and comes into contact with the outer peripheral surface of the pivot 41.

Likewise, at least temporary, the second support member 21 can support the front-end portion 3 3 a of the other extension portion 33 of the band-like body 10 so that the front-end portion 33a of the other extension portion 33 of the band-like body 10 is interposed between the band-like body guide member 42 and the belt guide member 43 and comes into contact with the outer peripheral surface of the pivot 41.

Further, as the respective first and second support members 20 and 21 are rotated about the pivot 41 while the front-end portions 32a and 33a of the respective extension portions 32 and 33 are supported by the respective first and second support members 20 and 21, the band-like body 10 can be rotated about the pivot 41. The band-like body can be displaced to at least a state where the lower portion 31 is positioned above the headrest 5 and a state where the lower portion 31 is positioned below the middle portion of the seat back 3.

Further, each of the first and second shoulder belts 14 and 15 can be interposed between and detached from the two protruding members 43a and 43a of the belt guide member 43 of each of the first and second support members 20 and 21. Accordingly, each of the first and second support members 20 and 21 restricts the movement of each of the first and second shoulder belts 14 and 15, which is interposed between the two protruding members 43a and 43a, in the axial direction of the pivot 41 (that is, the lateral direction of the seat back 3).

Meanwhile, the rotation of each of the first and second support members 20 and 21 about the pivot 41 is restricted within a predetermined range. For example, as seen in the axial direction of the pivot 41, this predetermined range is a range from a state where an opening of the V shape formed by the band-like body guide member 42 and the belt guide member 43 is directed to the upper side of the seat back 3 to a state where the opening of the V shape is directed to the front lower side of the seat back 3 through a state where the opening of the V shape is directed to the front side of the seat back 3. Accordingly, for example, it is prohibited to shift a state where the opening of the V shape, as seen in the axial direction of the pivot 41, formed by the band-like body guide member 42 and the belt guide member 43 is directed to the rear side of the seat back 3.

A buckle switch 22 detects whether the tongue plate 18 is engaged with and connected and fixed to the buckle 19 or not, and outputs a signal that corresponds to the result of the detection.

The motor controller 23, which includes an electronic circuit such as a CPU (Central Processing Unit), detects the rotation amount of each of the belt reels 11b, 12b, and 13b (that is, the drawing amount of each of the belts 14, 15, and 16); the rotational speed of each of the belt reels (that is, the winding speed or the drawing speed of each of the belts 14, 15, and 16); and the rotation direction of each of the belt reels 11b, 12b, and 13b; and the like. Further, the motor controller controls the driving of each of the motors 11c, 12c, and 13c (that is, flowing current). Alternatively, as previously described, in a case that the first to third motors 11c, 12c, 13c are not provided in the first to third retractors 11, 12, 13, the motor controller 23 can be omitted.

Moreover, when the buckle switch 22 detects that the state of the tongue plate is changed to a state where the tongue plate 18 is not connected and fixed to the buckle 19 from a state where the tongue plate 18 is connected and fixed to the buckle 19, the motor controller 23 winds the first and second shoulder belts 14 and 15 by driving the first motor 11c of the first retractor 11 and the second motor 12c of the second retractor 12.

The seat belt device 1 according to this embodiment has the above-mentioned structure. Next, the operation of the seat belt device 1 will be described below.

First, in the unmounted state where the tongue plate 18 is detached from the buckle 19 (for example, an initial state where various operations are not performed by an occupant, or the like), the front-end portions 32a and 33a of the respective extension portions 32 and 33 are supported by the respective first and second support members 20 and 21 and the band-like body 10 is in the state where the lower portion 31 is positioned above the headrest 5, for example, as shown in FIGS. 1 and 2.

In this case, while each of the first and second shoulder belts 14 and 15 is apart from an area between the two protruding members 43a and 43a of the belt guide member 43 of each of the first and second support members 20 and 21, the first and second shoulder belts are wound by the respective first and second retractors 11 and 12 by a winding force larger than the winding force of the third retractor 13 for winding the first lap belt 16.

Accordingly, tension, which is directed to the rear lower side of the seat back 3, is applied to the extension portions 32 and 33 of the band-like body 10 by the first and second shoulder belts 14 and 15, respectively. Therefore, the front-end portions 32a and 33a of the extension portions 32 and 33 are supported so that each of the front-end portions of the extension portions comes into contact with the outer peripheral surface of the pivot 41 while the front-end portions 32a and 33a of the extension portions 32 and 33 are interposed between the band-like body guide members 42 and the belt guide members 43 of the first and second support members 20 and 21 in the circumferential direction of the pivot 41, respectively.

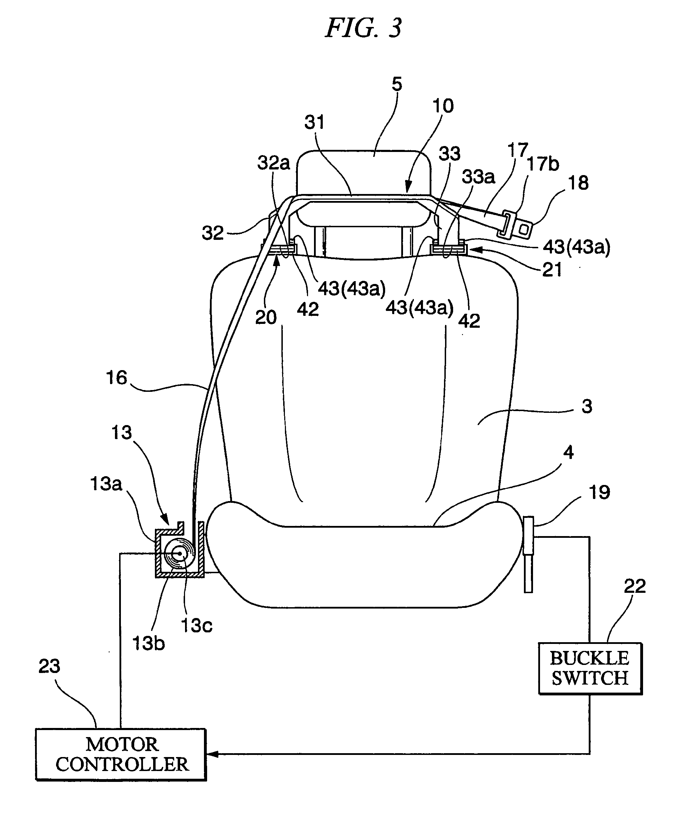

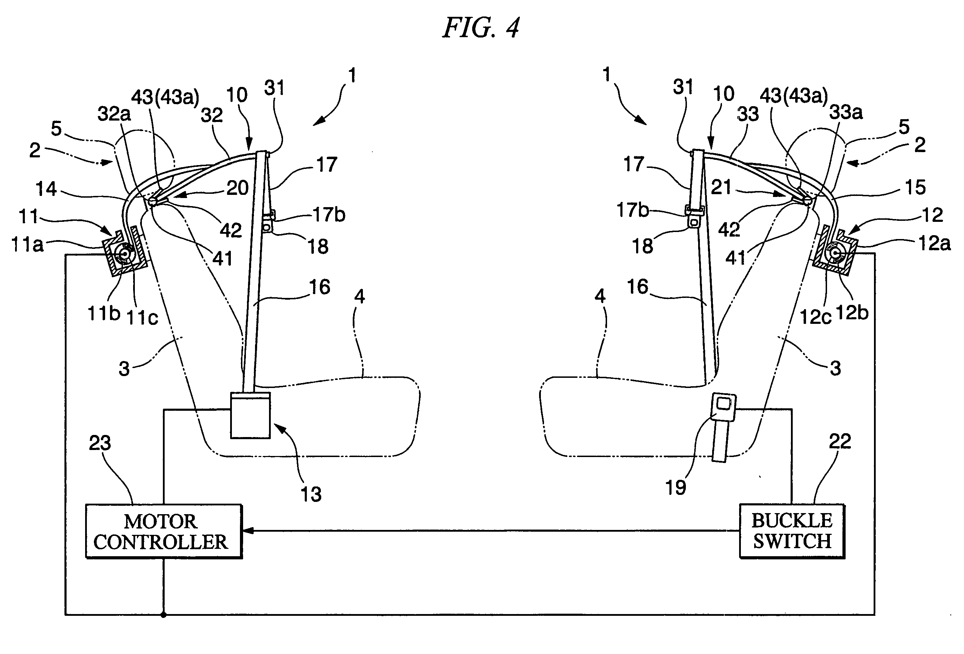

Then, when the tongue plate 18 is grasped by one hand of an occupant seated in the seat 2 and is pulled toward the buckle 19 to the front lower side of the seat back 3, the respective extension portions 32 and 33 come into contact with the band-like body guide members 42 and the band-like body 10 is rotated about the pivot 41 while the front-end portions 32a and 33a of the respective extension portions 32 and 33 are supported by the respective first and second support members 20 and 21, for example, as shown in FIGS. 3 and 4. Further, for example, the band-like body 10 is displaced to a state where the lower portion 31 is positioned on the front side of the headrest 5 from a state where the lower portion 31 is positioned above the headrest 5.

Accordingly, the first lap belt 16 starts to be wound by the third retractor 13.

Furthermore, if the force for pulling the tongue plate 18 down with one hand of the occupant is increased, the respective first and second shoulder belts 14 and 15 are drawn from the respective first and second retractors 11 and 12 against the winding force of the respective first and second retractors 11 and 12, so that the drawing amount of each of the first and second shoulder belts is increased.

Accordingly, the front-end portions 32a and 33a of the respective extension portions 32 and 33 of the band-like body 10 are separated from the outer peripheral surfaces of the pivots 41, so that the support of the front-end portions by the respective first and second support members 20 and 21 is released.

Moreover, the winding amount of the first lap belt 16 wound by the third retractor 13 is increased.

Further, for example, the band-like body 10 is displaced to a state where the lower portion 31 is positioned on the front lower side of the headrest 5 from a state where the lower portion 31 is positioned on the front side of the headrest 5.

Accordingly, each of the first and second shoulder belts 14 and 15 is interposed between the two protruding members 43a and 43a of the belt guide member 43 of each of the first and second support members 20 and 21. Therefore, the movement of each of the first and second shoulder belts is restricted in the axial direction of the pivot 41 (that is, the lateral direction of the seat back 3).

After that, when the tongue plate 18 is engaged with and connected and fixed to the buckle 19, the band-like body 10 is in a state where the lower portion 31 is positioned below the middle portion of the seat back 3, for example, as shown in FIGS. 5 and 6.

Moreover, the two extension portions 32 and 33 of the band-like body 10 and the respective first and second shoulder belts 14 and 15 connected to the respective extension portions 32 and 33 form a shoulder belt unit that restrains the shoulder and body of an occupant.

Further, the lower portion 31 of the band-like body 10 and the first and second lap belts 16 and 17 connected to the lower portion 31 form a lap belt unit that restrains the femoral region of an occupant.

Meanwhile, when the connection and fixing between the tongue plate 18 and the buckle 19 is released by the operation with one hand of an occupant in the mounted state where the tongue plate 18 is connected and fixed to the buckle 19, the buckle switch 22 outputs a signal that represents the release of the connection and fixing.

When the buckle switch 22 detects that the connection and fixing between the tongue plate 18 and the buckle 19 is released, the motor controller 23 makes the first and second shoulder belts 14 and 15 be wound by driving the first motor 11c of the first retractor 11 and the second motor 12c of the second retractor 12.

Accordingly, the band-like body 10 is displaced toward the upper side of the seat back 3, and the first lap belt 16 is drawn from the third retractor 13 against the winding force of the third retractor 13.

In this case, each of the first and second shoulder belts 14 and 15 is interposed between the two protruding members 43a and 43a of the belt guide member 43 of each of the first and second support members 20 and 21. Accordingly, when the winding amount of each of the first and second shoulder belts 14 and 15 wound by the respective first and second retractors 11 and 12 is increased, for example, as shown in FIG. 7A, the front-end portions 32a and 33a of the extension portions 32 and 33 of the band-like body 10 are displaced so as to be interposed between the band-like body guide members 42 and the belt guide members 43 of the first and second support members 20 and 21, respectively and so as to approach the outer peripheral surfaces of the pivots 41.

Further, for example, as shown in FIG. 7B, when each of the front-end portions of the extension portions comes into contact with the outer peripheral surface of the pivot 41 while the front-end portions 32a and 33a of the extension portions 32 and 33 of the band-like body 10 are interposed between the band-like body guide members 42 and the belt guide members 43 in the circumferential direction of the pivot 41, respectively the band-like body 10 is rotatable about the pivot 41.

Furthermore, the respective extension portions 32 and 33 come into contact with the belt guide members 43, and the band-like body 10 is displaced to a state where the lower portion 31 is positioned above the headrest 5 from a state where the lower portion 31 is positioned on the front lower side of the headrest 5 through a state where the lower portion 31 is positioned on the front side of the headrest 5.

Accordingly, each of the first and second shoulder belts 14 and 15 is detached from an area between the two protruding members 43a and 43a of the belt guide member 43 of each of the first and second support members 20 and 21, for example, as shown in FIG. 7C.

Moreover, the band-like body 10 is stopped at a predetermined position, where the rotation about the pivot 41 is restricted, together with the respective first and second support members 20 and 21.

As described above, the seat belt device 1 according to the embodiment of the invention includes the U-shaped band-like body 10 to which the respective belts 14, 15, 16, and 17 are connected. Accordingly, it may be possible to prevent the four-point type seat belt device 1 from being complex, and to prevent a frictional force applied to each of the belts 14, 15, 16, and 17 from increasing or to prevent the application of the frictional force from being complex.

In addition, it may be possible to finish mounting with only one simple connection operation for connecting the tongue plate 18 to the buckle 19 and to perform the connection operation with only one hand thus to prevent the mounting of the band-like body 10 and the respective belts 14, 15, 16, and 17 from being troublesome and thus to prevent incorrect mounting.

Further, the band-like body 10 is elastically deformable. Accordingly, even though the band-like body comes into contact with the chest or abdomen of an occupant, it may be possible to prevent the band-like body from being uncomfortable, due to press, or to prevent an impact from being excessively concentrated on and applied to the portion where the band-like body 10 comes into contact with the chest or abdomen of the occupant at the time of an emergency locking operation.

Furthermore, the band-like body 10 has a stiffness so as not to allow the band-like body to be bent by a force that is caused by the winding forces of the respective retractors 11, 12, and 13 and is applied to the band-like body through the respective first and second shoulder belts 14 and 15 and the first lap belt 16; and may be displaced to a state where the lower portion 31 is positioned above the headrest 5. Accordingly, it may be possible to prevent the band-like body 10 and the respective belts 14, 15, 16, and 17 from hindering an occupant from sitting down/up in the seat 2.

Moreover, since the band-like body 10 may be displaced to a state where the lower portion 31 is positioned below the middle portion of the seat back 3, the shoulder belt unit, which restrains the shoulder and body of an occupant, may be appropriately formed by using the two extension portions 32 and 33 of the band-like body 10 and the respective first and second shoulder belts 14 and 15 connected to the extension portions 32 and 33. In addition, the lap belt unit, which restrains the femoral region of an occupant, may be appropriately formed by using the lower portion 31 of the band-like body 10 and the first and second lap belts 16 and 17 connected to the lower portion 31. Accordingly, it may be possible to appropriately restrain the occupant.

Furthermore, the second lap belt 17 to which the tongue plate 18 is fixed is connected to the other end portion 31b of the lower portion 31 of the band-like body 10. Accordingly, when the tongue plate 18 is connected and fixed to the buckle 19, it may be possible to adequately dispose the lower portion 31 of the band-like body 10 at a predetermined position and to prevent the occurrence of a submarine phenomenon such as the slide of an occupant's body.

In addition, when the respective first and second shoulder belts 14 and 15 are wound by the first and second retractors 11 and 12 while the respective front-end portions 32a and 33a of the two extension portions 32 and 33 of the band-like body 10 are supported by the respective first and second support members 20 and 21, the band-like body 10 is rotated about the pivots 41 of the respective first and second support members 20 and 21, for example, from a state where the lower portion 31 is positioned on the front side of the seat back 3 to a state where the lower portion 31 is positioned above the headrest 5.

In this case, the ends 14a and 15a of the first and second shoulder belts 14 and 15 are connected to the substantially middle portions (or the lower portion side of the substantially middle portions) of the two extension portions 32 and 33, respectively. For example, as compared to when the one ends of the first and second shoulder belts are connected to the extension portions 32 and 33 at the front-ends side of the extension portions, it may be possible to adequately displace (rotate) the band-like body 10 to a state, where the lower portion 31 is positioned above the headrest 5, by a smaller force.

Therefore, it may be possible to adequately prevent the band-like body 10 and the respective belts 14, 15, 16, and 17 from hindering an occupant from sitting down/up in the seat 2.

Further, when the connection and fixing between the tongue plate 18 and the buckle 19 is released, a force for moving the band-like body to a state where the lower portion 31 is positioned below the middle portion of the seat back 3 by the winding force of the third retractor 13 and a force for moving the band-like body to a state where the lower portion 31 is positioned above the headrest 5 from the front side of the seat back 3 by the winding forces of the first and second retractors 11 and 12 are applied to the band-like body 10.

In this case, since the winding force of the third retractor 13 is smaller than the winding forces of the first and second retractors 11 and 12, the band-like body 10 is displaced to a state where the lower portion 31 is positioned above the headrest 5. Therefore, it may be possible to adequately prevent the band-like body 10 and the respective belts 14, 15, 16, and 17 from hindering an occupant from sitting down/up in the seat 2.

Furthermore, it may be possible to quickly wind the first and second shoulder belts 14 and 15 and to quickly position the lower portion 31 above the headrest 5 by driving the respective motors 11c and 12c of the first and second retractors 11 and 12 when the connection and fixing between the tongue plate 18 and the buckle 19 is released.

Meanwhile, in the above-mentioned embodiment, the first and second shoulder belts 14 and 15 have been provided with the first and second retractors 11 and 12, respectively. However, the invention is not limited thereto. For example, a single retractor for performing the operations for winding and drawing the first and second shoulder belts 14 and 15 may be provided instead of the first and second retractors 11 and 12.

On the other hand, in the above-mentioned embodiment, the first and second support members 20 and 21 may include biasing members (biasing units) such as springs for biasing the first and second support members so that the first and second support members are in a direction directed from the front side through the upper side to the rear side of the seat back 3 of rotations about the pivots 41.

Accordingly, while the respective front-end portions 32a and 33a of the two extension portions 32 and 33 of the band-like body 10 are supported by the respective first and second support members 20 and 21, the band-like body 10 is easily rotated about the pivots 41 of the respective first and second support members 20 and 21 by the biasing forces that are applied to the respective first and second support members 20 and 21 by the biasing members, for example, from a state where the lower portion 31 is positioned on the front side of the seat back 3 to a state where the lower portion 31 is positioned above the headrest 5. Therefore, it may be possible to adequately prevent the band-like body 10 and the respective belts 14, 15, 16, and 17 from hindering an occupant from sitting down/up in the seat 2.

Meanwhile, in the above-mentioned embodiment, the first and second retractors 11 and 12 have been fixed to the seat back 3. However, the invention is not limited thereto. For example, the first and second retractors may be disposed at the rear positions of the seat back 3.

On the other hand, in the above-mentioned embodiment, the third retractor 13 and the buckle 19 may be fixed to the vehicle body instead of the seat cushion 4.

Meanwhile, the second lap belt 17 may have expansion and contraction ability in the above-mentioned embodiment.

In the above-mentioned embodiment, each of the first to third retractors 11, 12, and 13 may be provided with a rotation sensor (for example, a pair of hall elements or the like) that detects the rotational position of each of the belt reels 11b, 12b, and 13b. In this case, a signal that is output from the rotation sensor in accordance with the rotation of each of the belt reels 11b, 12b, and 13b is input to the motor controller 23 is used to detect the rotation amount, the rotational speed, the rotation direction, and the like of each of the belt reels 11b, 12b, and 13b.

Meanwhile, the respective motors 11c, 12c, and 13c of the first to third retractors 11, 12, and 13 may be omitted in the above-mentioned embodiment. In this case, the winding forces of the winding springs of the respective first and second retractors 11 and 12 may be set to be larger than the winding force of the winding spring of the third retractor 13.

The invention is not to be considered as being limited by the foregoing description, and is only limited by the scope of the appended claims. A seat belt device (1) includes a band-like body (10) that is formed in a U shape due to a lower portion (31) and two extension portions (32, 33) and is elastically deformable, first and second retractors (11, 12) that wind each belt (14, 15) connected to each extension portion (32, 33), a third retractor (13) that winds a first lap belt (16) connected to one end portion of the lower portion (31), a second lap belt (17) that is connected to other end portion of the lower portion (31) and has a tongue plate (18), a buckle (19) to which the tongue plate (18) can be connected, and first and second support members (20, 21) that support front-end portions (32a, 33a) of each extension portions (32, 33) and are rotatable about pivots (41).

### DESCRIPTION OF THE REFERENCE SYMBOLS

- 1:: seat belt device,
- 2:: seat,
- 3:: seat back,
- 4:: seat cushion,
- 5:: head rest,
- 10:: band-like body,
- 11:: first retractor (first winding unit),
- 11c:: first motor,
- 12:: second retractor (second winding unit),
- 12c:: second motor,
- 13:: third retractor (third winding unit),
- 14:: first shoulder belt (first belt),
- 15:: second shoulder belt (second belt),
- 16:: first lap belt (third belt),
- 17:: second lap belt (fourth belt),
- 18:: tongue plate (tongue member),
- 19:: buckle (connecting unit),
- 20:: first support member,
- 21:: second support member,
- 22:: buckle switch (detection unit),
- 23:: motor controller (control unit),
- 31:: lower portion,
- 32, 33:: extension portion,

## Claims

1. A seat belt device (1) comprising:
a seat (2) that includes a seat back (3), a seat cushion (4), and a headrest (5);
a band-like body (10) that includes a lower portion (31) and two extension portions (32, 33) erected and extending from both ends of the lower portion (31), the band-like body (10) being formed in a U-shape and being elastically deformable;
a first winding unit (11) that is provided at the seat back (3) or at a rear position of the seat back (3) and winds a first belt (14), one end (14a) of the first belt (14) being connected to one (32) of the two extension portions (32, 33) of the band-like body (10);
a second winding unit (12) that is provided at the seat back (3) or at a rear position of the seat back (3) and winds a second belt (15), one end (15a) of the second belt (15) being connected to the other (33) of the two extension portions (32, 33) of the band-like body (10);
a third winding unit (13) that is provided on one side of the seat cushion (4) and winds a third belt (16), one end (16a) of the third belt (16) being connected to one end portion (31 a) of the lower portion (31) of the band-like body (10),
a connecting unit (19) that is provided on the other side of the seat cushion (4) and to which a tongue member (18) of a fourth belt (17) is uncoupleably connected, one end (17a) of the fourth belt (17) being connected to the other end portion of the lower portion (31) of the band-like body (10) and the tongue member (18) being provided at the other end (17b) of the fourth belt (17); and
two support members (20, 21) that are provided at the seat back (3), support front-end portions (32a, 33a) of the two extension portions (32, 33) of the band-like body (10), and are rotatable about rotating shafts (41) extending in a lateral direction of the seat back (3),
wherein the band-like body (10) is rotatable about the rotating shafts (41) of the two support members (20, 21) that support the respective front-end portions (32a, 33a) of the two extension portions (32, 33), and is displaceable to a state where at least the lower portion (31) is positioned above the headrest (5) and a state where the lower portion (31) is positioned below a middle portion of the seat back (3),
wherein in the state where the lower portion (31) is positioned below the middle portion of the seat back (3), the front-end portions (32a, 33a) of the respective extension portions (32, 33) of the band-like body (10) are separated from the rotating shafts (41), so that the support of the front-end portions (32a, 33a) by the respective first and second support members (20, 21) is released.

2. The seat belt device (1) according to claim 1,
wherein one end of the first belt (14) is connected to a substantially middle portion of one extension portion (32), and one end of the second belt (15) is connected to a substantially middle portion of the other extension portion (33).

3. The seat belt device (1) according to claim 1,
wherein the support members (20, 21) include biasing units for biasing a rotation in a direction directed toward the upper side from the front side of the seat back (3) of rotations about the rotating shafts (41).

4. The seat belt device (1) according to claim 3,
wherein a winding force of the third winding unit (13) for winding the third belt (16) is smaller than a winding force of the first winding unit (11) for winding the first belt (14) and than a winding force of the second winding unit (12) for winding the second belt (15).

5. The seat belt device (1) according to claim 3, further comprising:
a detection unit (22) for detecting whether the tongue member (18) is connected to the connecting unit (19) or not,
wherein the first winding unit (11) includes a first motor (11c) that generates a winding force for winding the first belt (14),
the second winding unit (12) includes a second motor (12c) that generates a winding force for winding the second belt (15), and
the seat belt device (1) comprising:
a control unit (23) for making the first (11) and second (12) winding unit wind the first (14) and second (15) belts by driving the first (11c) and second (12c) motors when the detection unit (22) detects that the state of the tongue member (18) is changed to a state where the tongue member (18) is not connected to the connecting unit (19) from a state where the tongue member (18) is connected to the connecting unit (19).

## Patentansprüche

1. Sitzgurtvorrichtung (1), umfassend:
einen Sitz (2), welcher eine Sitzlehne (3), ein Sitzkissen (4) und eine Kopfstütze (5) umfasst;
einen bandähnlichen Körper (10), welcher einen unteren Abschnitt (31) und zwei Verlängerungsabschnitte (32, 33) umfasst, die von beiden Enden des unteren Abschnitts (31) aufgestellt sind und sich von demselben erstrecken, wobei der bandähnliche Körper (10) in einer U-Form gebildet und elastisch verformbar ist;
eine erste Aufrolleinheit (11), die an der Sitzlehne (3) oder an einer hinteren Position der Sitzlehne (3) bereitgestellt ist und einen ersten Gurt (14) aufrollt, wobei ein Ende (14a) des ersten Gurts (14) mit einem (32) der zwei Verlängerungsabschnitte (32, 33) des bandähnlichen Körpers (10) verbunden ist;
eine zweite Aufrolleinheit (12), die an der Sitzlehne (3) oder an einer hinteren Position der Sitzlehne (3) bereitgestellt ist und einen zweiten Gurt (15) aufrollt, wobei ein Ende (15a) des zweiten Gurts (15) mit dem anderen (33) der zwei Verlängerungsabschnitte (32, 33) des bandähnlichen Körpers (10) verbunden ist;
eine dritte Aufrolleinheit (13), die an einer Seite des Sitzkissens (4) bereitgestellt ist und einen dritten Gurt (16) aufrollt, wobei ein Ende (16a) des dritten Gurts (16) mit einem Endabschnitt (31a) des unteren Abschnitts (31) des bandähnlichen Körpers (10) verbunden ist,
eine Verbindungseinheit (19), die an der anderen Seite des Sitzkissens (4) bereitgestellt ist und an welcher ein Zungenelement (18) eines vierten Gurts (17) lösbar verbunden ist, wobei ein Ende (17a) des vierten Gurts (17) mit dem anderen Endabschnitt des unteren Abschnitts (31) des bandähnlichen Körpers (10) verbunden ist und wobei das Zungenelement (18) an dem anderen Ende (17b) des vierten Gurts (17) bereitgestellt ist; und
zwei Stützelemente (20, 21), die an der Sitzlehne (3) bereitgestellt sind, Vorderseitenabschnitte (32a, 33a) der zwei Verlängerungsabschnitte (32, 33) des bandähnlichen Körpers (10) stützen und um Drehwellen (41), die sich in einer lateralen Richtung der Sitzlehne (3) erstrecken, drehbar sind,
wobei der bandähnliche Körper (10) um die Drehwellen (41) der zwei Stützelemente (20, 21), die die jeweiligen Vorderseitenabschnitte (32a, 33a) der zwei Verlängerungsabschnitte (32, 33) stützen, drehbar ist und in einen Zustand verlagerbar ist, in welchem wenigstens der untere Abschnitt (31) über der Kopfstütze (5) angeordnet ist, und in einen Zustand verlagerbar ist, in welchem der untere Abschnitt (31) unterhalb eines Mittelabschnitts der Sitzlehne (3) angeordnet ist,
wobei in dem Zustand, in welchem der untere Abschnitt (31) unterhalb des Mittelabschnitts der Sitzlehne (3) angeordnet ist, die Vorderseitenabschnitte (32a, 33a) der jeweiligen Verlängerungsabschnitte (32, 33) des bandähnlichen Körpers (10) von den Drehwellen (41) getrennt sind, so dass das Stützen der Vorderseitenabschnitte (32a, 33a) durch das erste beziehungsweise das zweite Stützelement (20, 21) freigegeben ist.

2. Sitzgurtvorrichtung (1) nach Anspruch 1,
wobei ein Ende des ersten Gurts (14) mit einem im Wesentlichen mittleren Abschnitt des einen Verlängerungsabschnitts (32) verbunden ist, und wobei ein Ende des zweiten Gurts (15) mit einem im Wesentlichen mittleren Abschnitt des anderen Verlängerungsabschnitts (33) verbunden ist.

3. Sitzgurtvorrichtung (1) nach Anspruch 1,
wobei die Stützelemente (20, 21) Beeinflussungseinheiten umfassen, um eine Drehung in eine Drehrichtung um die Drehwellen (41) zu beeinflussen, die in Richtung der oberen Seite von der vorderen Seite der Sitzlehne (3) gerichtet ist.

4. Sitzgurtvorrichtung (1) nach Anspruch 3,
wobei eine Aufrollkraft der dritten Aufrolleinheit (13) zum Aufrollen des dritten Gurts (16) kleiner als eine Aufrollkraft der ersten Aufrolleinheit (11) zum Aufrollen des ersten Gurts (14) und als eine Aufrollkraft der zweiten Aufrolleinheit (12) zum Aufrollen des zweiten Gurts (15) ist.

5. Sitzgurtvorrichtung (1) nach Anspruch 3, ferner umfassend:
eine Detektionseinheit (22) zum Detektieren, ob das Zungenelement (18) mit der Verbindungseinheit (19) verbunden ist oder nicht, wobei die erste Aufrolleinheit (11) einen ersten Motor (11c) umfasst, der eine Aufrollkraft zum Aufrollen des ersten Gurts (14) erzeugt, wobei die zweite Aufrolleinheit (12) einen zweiten Motor (12c) umfasst, der eine Aufrollkraft zum Aufrollen des zweiten Gurts (15) erzeugt, und wobei die Sitzgurtvorrichtung (1) umfasst:
eine Regelungs-/Steuerungseinheit (23) zum Veranlassen, dass die erste Aufrolleinheit (11) und die zweite Aufrolleinheit (12) den ersten Gurt (14) und den zweiten Gurt (15) aufrollt, indem der erste Motor (11c) und der zweite Motor (12c) angetrieben werden, wenn die Detektionseinheit (22) detektiert, dass der Zustand des Zungenelements (18) von einem Zustand, in welchem das Zungenelement (18) mit der Verbindungseinheit (19) verbunden ist, zu einem Zustand geändert wird, in welchem das Zungenelement (18) mit der Verbindungseinheit (19) nicht verbunden ist.

## Revendications

1. Dispositif de ceinture de sécurité (1), comprenant :
un siège (2) qui comprend un dossier de siège (3), un coussin de siège (4) et un repose-tête (5) ;
un corps de type bande (10) qui comprend une portion inférieure (31) et deux portions d'extension (32, 33) dressées et s'étendant à partir des deux extrémités de la portion inférieure (31), le corps de type bande (10) étant en forme de U et étant déformable élastiquement ;
une première unité d'enroulement (11) qui est disposée au niveau du dossier de siège (3) ou au niveau d'une position arrière du dossier de siège (3) et enroule une première ceinture (14), une extrémité (14a) de la première ceinture (14) étant raccordée à une (32) des deux portions d'extension (32, 33) du corps de type bande (10) ;
une deuxième unité d'enroulement (12) qui est disposée au niveau du dossier de siège (3) ou au niveau d'une position arrière du dossier de siège (3) et enroule une deuxième ceinture (15), une extrémité (15a) de la deuxième ceinture (15) étant raccordée à l'autre (33) des deux portions d'extension (32, 33) du corps de type bande (10) ;
une troisième unité d'enroulement (13) qui est disposée sur un côté du coussin de siège (4) et enroule une troisième ceinture (16), l'extrémité (16a) de la troisième ceinture (16) étant raccordée à une portion d'extrémité (31a) de la portion inférieure (31) du corps de type bande (10) ;
une unité de raccordement (19) qui est disposée sur l'autre côté du coussin de siège (4) et sur laquelle un organe de languette (18) d'une quatrième ceinture (17) est raccordé de manière découplable, une extrémité (17a) de la quatrième ceinture (17) étant raccordée à l'autre portion d'extrémité de la portion inférieure (31) du corps de type bande (10) et l'organe de languette (18) étant disposé au niveau de l'autre extrémité (17b) de la quatrième ceinture (17) ; et
deux organes de support (20, 21) qui sont disposés au niveau du dossier de siège (3), supportent des portions d'extrémité avant (32a, 33a) des deux portions d'extension (32, 33) du corps de type bande (10), et peuvent être mis en rotation autour d'arbres rotatifs (41) s'étendant dans une direction latérale du dossier de siège (3),
dans lequel le corps de type bande (10) peut être mis en rotation autour des arbres rotatifs (41) des deux organes de support (20, 21) qui supportent les portions d'extrémité avant (32a, 33a) respectives des deux portions d'extension (32, 33), et est déplaçable vers un état où au moins la portion inférieure (31) est positionnée au-dessus du repose-tête (5) et un état où la portion inférieure (31) est positionnée en dessous d'une portion de milieu du dossier de siège (3),
dans lequel, dans l'état où la portion inférieure (31) est positionnée en dessous de la portion de milieu du dossier de siège (3), les portions d'extrémité avant (32a, 33a) des portions d'extension (32, 33) respectives du corps de type bande (10) sont séparées des arbres rotatifs (41), de sorte que le support des portions d'extrémité avant (32a, 33a) par les premier et second organes de support (20, 21) respectifs est libéré.

2. Dispositif de ceinture de sécurité (1) selon la revendication 1,
dans lequel une extrémité de la première ceinture (14) est raccordée à une portion sensiblement de milieu d'une portion d'extension (32), et une extrémité de la deuxième ceinture (15) est raccordée à une portion sensiblement de milieu de l'autre portion d'extension (33).

3. Dispositif de ceinture de sécurité (1) selon la revendication 1,
dans lequel les organes de support (20, 21) comprennent des unités de sollicitation pour solliciter une rotation dans une direction dirigée vers le côté supérieur à partir du côté avant du dossier de siège (3) de rotations autour des arbres rotatifs (41).

4. Dispositif de ceinture de sécurité (1) selon la revendication 3,
dans lequel une force d'enroulement de la troisième unité d'enroulement (13) pour enrouler la troisième ceinture (16) est plus petite qu'une force d'enroulement de la première unité d'enroulement (11) pour enrouler la première ceinture (14) et qu'une force d'enroulement de la deuxième unité d'enroulement (12) pour enrouler la deuxième ceinture (15).

5. Dispositif de ceinture de sécurité (1) selon la revendication 3, comprenant en outre :
une unité de détection (22) pour détecter si l'organe de languette (18) est raccordé à l'unité de raccordement (19) ou non,
dans lequel la première unité d'enroulement (11) comprend un premier moteur (11c) qui génère une force d'enroulement pour enrouler la première ceinture (14),
la deuxième unité d'enroulement (12) comprend un second moteur (12c) qui génère une force d'enroulement pour enrouler la deuxième ceinture (15), et
le dispositif de ceinture de sécurité (1) comprenant :
une unité de commande (23) pour amener les première (11) et deuxième (12) unités d'enroulement à enrouler les première (14) et deuxième (15) ceintures en entraînant les premier (11c) et second (12c) moteurs lorsque l'unité de détection (22) détecte que l'état de l'organe de languette (18) est passé à un état où l'organe de languette (18) n'est pas raccordé à l'unité de raccordement (19) depuis un état où l'organe de languette (18) est raccordé à l'unité de raccordement (19).
